# EUROPEAN PATENT APPLICATION

(11) **EP 4 372 653 A1**
(43) Date of publication of application: **22.05.2024**
(21) Application number: 23209947.3
(22) Date of filing: 15.11.2023
(51) Int. Cl.: G06Q 20/20, G06Q 20/40, G06V 20/52, G07G 1/00, G07G 3/00

(54) **RISK IDENTIFICATION METHOD, APPARATUS, DEVICE AND STORAGE MEDIUM FOR SELF-SERVICE CHECKOUT**

(30) Priority: 21.11.2022 CN 202211456913
(71) Applicant: 1. Zhejiang Lianhe Technology Co., Ltd., Hangzhou (CN)
(72) Inventor: FENG, Xuetao, Beijing (CN); SONG, Jingdong, Beijing (CN); WANG, Yan, Beijing (CN)
(74) Representative: Renaudo, Adrien Hanouar

(57) **Abstract**

The embodiment of the present application provides a risk identification method, apparatus, device and storage medium for self-service checkout. The method includes: determining a risk commodity corresponding to a first human body trajectory obtained based on a first video, and an item should be excluded corresponding to an associated human body trajectory associated with the first human body trajectory obtained based on a second video, wherein the first video and the second video are collected by imaging apparatuses with different monitoring ranges; and processing the risk commodity corresponding to the first human body trajectory based on the associated human body trajectory, to exclude a risk commodity being the item should be excluded corresponding to the associated human body trajectory from the risk commodity corresponding to the first human body trajectory, to obtain a processed risk commodity. According to the present application, misrecognition of the risk commodity can be reduced, the misrecognition rate of the risk commodity is reduced, and the recognition accuracy is improved.

## Description

### FIELD

The present disclosure relates to the field of computer technology, and in particular to a risk identification method, apparatus, device and storage medium for self-service checkout.

### BACKGROUND

Self-service checkout device is rapidly becoming popular in the supermarket industry. More and more supermarkets, convenience stores, brand stores, etc. have changed the checkout model from manual checkout to self-service checkout.

At present, the popularity of self-service checkout device has not only brought about efficiency improvements and improved experience, but also brought about the problem of increased theft loss for merchants. Usually, based on the video collected by the camera on a single self-service checkout device, it is possible to identify commodity that are at risk of being stolen, when customer use the single self-service checkout machine for self-checkout, such as commodity that are at risk of missed scanning or false scanning.

However, this method has the problem of low recognition accuracy.

### SUMMARY

Embodiment of the present application provides a risk identification method, apparatus, device and storage medium for self-service checkout to solve the problem of low accuracy in identifying risk commodity in the prior art.

In the first aspect, an embodiment of the present application provides a risk identification method for self-service checkout, including:
determining a risk commodity corresponding to a first human body trajectory obtained based on a first video, and an item should be excluded corresponding to an associated human body trajectory associated with the first human body trajectory obtained based on a second video, wherein the first video and the second video are collected by imaging apparatuses with different monitoring ranges; and
processing the risk commodity corresponding to the first human body trajectory based on the associated human body trajectory, to exclude a risk commodity being the item should be excluded corresponding to the associated human body trajectory from the risk commodity corresponding to the first human body trajectory, to obtain a processed risk commodity.

In the second aspect, an embodiment of the present application provides a risk identification device for self-service checkout, including:
a determining module, configured to determine a risk commodity corresponding to a first human body trajectory obtained based on a first video, and an item should be excluded corresponding to an associated human body trajectory associated with the first human body trajectory obtained based on a second video, wherein the first video and the second video are collected by imaging apparatuses with different monitoring ranges; and
an excluding module, configured to process the risk commodity corresponding to the first human body trajectory based on the associated human body trajectory, to exclude a risk commodity being the item should be excluded corresponding to the associated human body trajectory from the risk commodity corresponding to the first human body trajectory, to obtain a processed risk commodity.

In a third aspect, an embodiment of the present application provides an electronic device, including: a memory and a processor; where the memory stores one or more computer instructions, when the one or more computer instructions are executed by the processor, the method as described in any one of the first aspect is achieved.

In a fourth aspect, an embodiment of the present application provides a computer-readable storage medium on which a computer program is stored. When the computer program is executed, the method as described in any one of the first aspect is achieved.

An embodiment of the present application also provides a computer program, where the computer program is executed by a computer to achieve the method as described in any one of the first aspect.

In the embodiment of the present application, a risk commodity can be identified for one single self-service checkout device by combining videos collected by multiple imaging apparatuses. Specifically, a first video is used to record a process of a customer using a self-service checkout device for self-checkout. The first video and the second video are collected by imaging apparatuses with different monitoring ranges. A risk commodity corresponding to a first human body trajectory obtained based on the first video can be determined, and an item should be excluded corresponding to an associated human body trajectory associated with the first human body trajectory obtained based on a second video can also be determined. The risk commodity corresponding to the first human body trajectory is processed based on the associated human body trajectory, to exclude a risk commodity being the item should be excluded corresponding to an associated human body trajectory associated from the risk commodity corresponding to the first human body trajectory, to obtain a processed risk commodity, enabling the excluding an item that is determined as not requiring payment from the risk commodity determined by video collected by the imaging apparatus provided on one single self-service checkout device, thereby reducing the misrecognition of risk commodity, reducing the misrecognition rate of the risk commodity and improving the recognition accuracy.

### BRIEF DESCRIPTION OF THE DRAWINGS

In order to more clearly explain the embodiments of the present application or the technical solutions in the prior art, the following will briefly introduce the drawings that need to be used in the description of the embodiments or the prior art. Obviously, the drawings in the following description are embodiments of the present application. For those of ordinary skill in the art, other drawings can be acquired based on these drawings without exerting creative efforts.
FIG. 1 is a schematic diagram of an application scenario according to an embodiment of the present application;
FIG. 2 is a schematic flow chart of a risk identification method for self-service checkout according to an embodiment of the present application;
FIG. 3 is a schematic structural diagram of a self-service checkout loss prevention system according to an embodiment of the present application;
FIG. 4 is a schematic diagram of a video frame according to an embodiment of the present application;
FIG. 5 is a schematic diagram of a processing flow of video recognition performed by a first video recognition module according to an embodiment of the present application;
FIG. 6 is a schematic diagram of a processing flow of video recognition performed by a second video recognition module according to an embodiment of the present application;
FIG. 7 is a schematic diagram of a processing flow of risky commodity judgment performed by a comprehensive judgment module according to an embodiment of the present application;
FIG. 8 is a schematic structural diagram of a risk identification device for self-service checkout according to an embodiment of the present application; and
FIG. 9 is a schematic structural diagram of an electronic device according to an embodiment of the present application.

### DETAILED DESCRIPTION OF EXAMPLE EMBODIMENTS

In order to make the purpose, technical solutions and advantages of the embodiments of the present application clearer, the technical solutions in the embodiments of the present application will be clearly and completely described below in conjunction with the drawings in the embodiments of the present application. Obviously, the described embodiments are part of the embodiments of the present application, but not all of them. All other embodiments obtained by those of ordinary skill in the art based on the embodiments in the present application without creative efforts fall within the scope of protection of the present application.

The terms used in the embodiments of the present application are only for the purpose of describing specific embodiments and are not intended to limit the present application. As used in the embodiments and the appended claims, the singular forms "a", "an" and "the" are intended to include the plural forms as well, unless the context clearly dictates other meanings. Generally, "a plurality of" includes at least two, but at least one is not excluded.

It should be understood that the term "and/or" used in the present application is only an association relationship describing related objects, indicating that there can be three relationships, for example, A and/or B, which may mean: A alone exists, A and B exist simultaneously, and B alone exists. In addition, the character "/" in the present application generally indicates that the related objects are an "or" relationship. Depending on the context, the words "if" or "as if" as used herein may be interpreted as "when" or "as" or "in response to determination" or "in response to detection". Similarly, depending on the context, the phrase "if determined" or "if detected (stated condition or event)" may be interpreted as "when determined" or "in response to determining" or "when (stated condition or event) is detected )" or "in response to detecting (a stated condition or event)".

It should also be noted that the terms "include", "comprise" or any other variation thereof are intended to cover a non-exclusive inclusion, such that a commodity or a system including a list of elements includes not only these elements but also those not expressly listed other elements, or elements inherent to the commodity or the system. Without further limitation, an element defined by the statement "comprise a..." does not exclude the presence of other identical elements in the commodity or the system that includes the stated element.

In addition, the sequence of steps in the following method embodiments is only an example and is not strictly limited.

In order to facilitate those skilled in the art to understand the technical solutions provided by the embodiments of the present application, the technical environment in which the technical solutions are implemented is first described below.

Self-service checkout device refers to all-in-one self-service checkout device provided for a customer to use. The popularity of self-service checkout device not only brings about efficiency improvements and improved experience, but also brings about the problem of increased theft loss for merchants. Therefore, it has become a common and strong demand in related industries to use technical means to detect theft risks such as missed scans and fake scans during customer's self-service code scanning payment. For example, when using a self-service code scanning device, if a commodity is not scanned and entered, it will be bagged and taken away, which is called a missed scan. When using self-service code scanning device, if a customer holds a commodity and scans the code of the commodity, but fails to enter the code successfully, and is then bagged and taken away, it is called a fake scan.

In practical applications, a self-service checkout loss prevention system can be used to prevent losses in self-service checkout device. The self-service checkout loss prevention system refers to hardware and software systems that are used to automatically or human assisted perform review work. Generally, the main functions of a self-service checkout loss prevention system are: installing a dedicated monitoring camera for each self-service checkout device, deploying a computing unit and intelligent identification algorithm, and performing algorithm analysis on the video of the self-service QR code payment process captured by the monitoring camera. If it is found that some commodities have risks such as fake scan or missed scan, an alarm message will be output.

From the perspective of real-time risk discovery and alarm, the self-service checkout loss prevention system can be divided into two types: in-process alarm and post-process alarm. The in-process alarm system will send out alarm signals in real time, such as flashing lights, locking the screen or sending information to field workers' handheld devices. Post-process alarm generally summarizes and displays risky transaction videos and risk information discovered by the self-service checkout loss prevention system through a software platform. Staff can replay the transaction videos to confirm the risks.

In actual products, the classification of in-process alarm and post-process alarm is not absolute. Usually, in order to avoid disturbing normal customer caused by false alarms, some supermarkets do not process alarm information in real time on site, but conduct manual review and confirmation afterwards. Thereby the in-process alarm becomes the post-process alarm. On the other hand, if the supermarket arranges dedicated personnel to handle the alarm information in a timely manner, and can quickly make review judgments based on the video and related information provided by the software platform after the alarm, and deal with it before the customer leaves, then the post-process alarm is equivalent to in-process alarm.

As can be seen from the methods of above risk discovery and alarm, the goal of designing and implementing a self-service checkout loss prevention system is to discover risks in the self-service QR code payment process with higher accuracy and recall rates. At the same time, the self-service checkout loss prevention system can also cooperate with staff to complete risk review and confirmation with higher efficiency. The risk identification method for self-service checkout according to embodiments of the present application can be applied to both in-process alarm products and post-process alarm products.

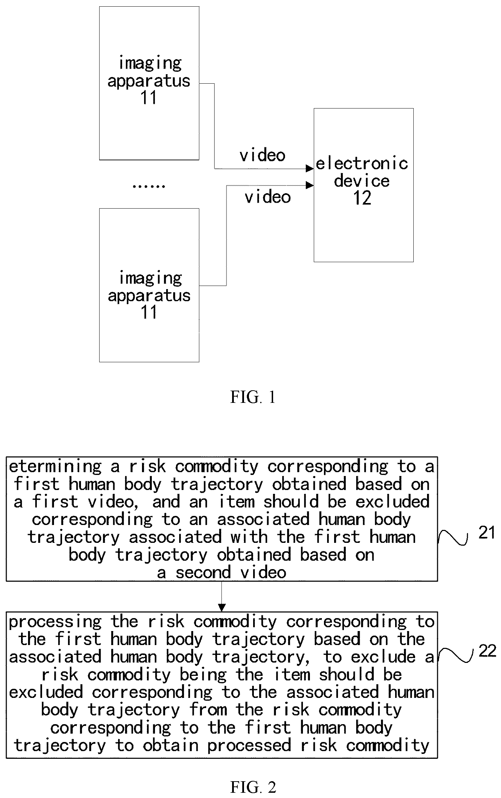

FIG. 1 is a schematic diagram of an application scenario of a risk identification method for self-service checkout according to an embodiment of the present application. As shown in FIG. 1, the application scenario may include at least two imaging apparatuses 11 and electronic devices 12. For example, the monitoring ranges of at least two imaging apparatuses 11 are different. At least one imaging apparatus of the at least two imaging apparatuses 11 is used to image the process of a customer using the self-service checkout device to check out. Different imaging apparatuses 11 may correspond to different self-service checkout devices. The electronic device 12 may identify commodity with a risk of theft loss based on the videos collected by at least two imaging apparatuses 11. For example, the electronic device 12 may be a server, such as a physical server, a cloud server, a virtual server, etc.

In one embodiment, the at least two imaging apparatuses 11 are both used to image the process of a customer using the self-service checkout device to check out. For example, at least two imaging apparatuses 11 may be on one-to-one correspondence to at least two self-service checkout devices, and the imaging apparatuses 11 may be integrated into the corresponding self-service checkout device, or may be installed on the corresponding self-service checkout device.

In another embodiment, at least one of the at least two imaging apparatuses 11 is used to image the process of a customer using the self-service checkout device to check out, and remaining imaging device may be used to image the processes other than the customer using the self-service checkout device to check out according to needs, such as the process of customer entering the store, etc.

For ease of differentiation, the imaging apparatus used to image the process of the customer using the self-service checkout device to check out can be recorded as the first imaging apparatus, and the imaging apparatus used to photograph other processes can be recorded as the second imaging apparatus. It should be understood that the number of second imaging apparatus may be 0. When the number of second imaging apparatus is 0, the number of first imaging apparatuses is greater than or equal to 2; when the number of second imaging apparatus is greater than 0, the number of first imaging apparatuses is greater than or equal to 1.

Usually, the commodity with a risk of theft loss is identified based on the videos collected by at the camera provided on one single self-service checkout device, when customer uses the single self-service checkout device to check out. However, due to a limited monitoring range of the camera on a single self-service checkout device, only a smaller area near the self-service checkout device may be seen. The items carried by customer may not all be the commodity that need to be scanned for payment. Therefore, those items carried by customer that do not need to be scanned for payment may be misidentified as risk commodities, and leads to a high misidentification rate and low identification accuracy of a risk commodity.

For example, the items carried by customer that do not need to be scanned for payment may include: a water cup, an umbrella, a wallet, a hat, a scarf, a children's toy and other items brought by the customer, a commodity purchased at the counter in a supermarket and for which payment has been completed (a small electrical appliances, cosmetics, cooked food, etc.), a commodity not needed anymore during the self-service checkout scan code payment process and put back on the shelf, and a commodity that has been paid for on the self-service checkout device (in actual scenarios, due to promotions with using points discounts, it is common to check out multiple times for commodities purchased in one store), etc. From only the monitoring camera on a single self-service checkout device, the visual recognition algorithm cannot determine whether the items carried by the customer belong to the above-mentioned items that do not need to be scanned for payment, so it will lead to false alarms. If the in-process alarm is used, false alarms will disturb normal customer. If the post-process alarm is used, it may increase the review workload of the staff. Moreover, it is also very difficult to judge from the video frame of the monitoring camera of the self-service checkout device to make right judgment on this situation depends only on a single unit.

In order to solve the technical problem of high misidentification rate and low identification accuracy for a risk commodity, in the embodiment of the present application, a risk commodity can be identified for one single self-service checkout device by combining videos captured by multiple imaging apparatuses. Specifically, the first video is used to record the process of a customer using the self-service checkout device for self-service checkout. The first video and the second video are collected by imaging apparatuses with different monitoring ranges. A risk commodity corresponding to a first human body trajectory can be obtained based on the first video, and item should be excluded corresponding to the associated human body trajectory associated with the first human body trajectory can be obtained based on the second video, by performing corresponding processing on the risk commodity corresponding to the first human body trajectory based on the associated human body trajectory, a processed risk commodity can be determined by excluding a risk commodity being an item should be excluded corresponding to the associated human body trajectory from the risk commodity corresponding to the first human body trajectory, which enables the excluding the items do not need to be scanned for payment from the risk commodity determined by videos collected by the imaging apparatus provided on one single self-service checkout device, thereby reducing the misidentification of the risk commodity, reducing the misidentification rate of the risk commodity, and improving the accuracy of identification.

It should be noted that in order to acquire a human body feature corresponding to the trajectory based on the video collected by the imaging apparatus, the video recognition needs to be performed on the video, such as extracting the human body feature, human body tracking, etc. In one embodiment, the video recognition process may be performed inside the imaging apparatus. In another embodiment, the video recognition process may be performed by a device that provides computing functions corresponding to each imaging apparatus. In yet another embodiment, the video recognition process may be performed by the electronic device 12.

It should be noted that the method provided by the embodiments of the present application can be applied to retail scenarios such as supermarkets, supermarkets, convenience stores, and brand stores, and can be used to risk identification of the self-service checkout device in these scenarios. In one embodiment, said method can be applied in supermarkets to identify risk commodity in supermarkets. Since image/video technology is used to identify risk commodity, and image/video technology belongs to digital technology, the method provided by the embodiment of the present application can empowering supermarkets to digitize.

Some embodiments of the present application will be described in detail below with reference to the accompanying drawings. The following embodiments and features in the embodiments may be combined with each other when no conflicts occur.

FIG. 2 is a schematic flowchart of a risk identification method for self-service checkout according to an embodiment of the present application. This embodiment can be applied to the electronic device 12 in FIG. 1, and can be specifically executed by the processor of the electronic device 12. As shown in FIG. 2, the method in this embodiment may include:
Step 21: determining a risk commodity corresponding to a first human body trajectory obtained based on a first video, and an item should be excluded corresponding to an associated human body trajectory associated with the first human body trajectory obtained based on a second video;
Step 22: processing the risk commodity corresponding to the first human body trajectory based on the associated human body trajectory, to exclude a risk commodity being the item should be excluded corresponding to the associated human body trajectory from the risk commodity corresponding to the first human body trajectory, to obtain a processed risk commodity.

In this embodiment of the present application, the first video is a video collected by the first imaging apparatus. When the number of second imaging apparatus is 0, the second video may be a video collected by the first imaging apparatus. When the number of second imaging apparatus is greater than 0, the second video may be a video collected by the second imaging apparatus. Furthermore, when the number of first imaging apparatuses is multiple, the second video may also include a video collected by the first imaging apparatus. For example, assuming that imaging apparatus A and imaging apparatus B are the first imaging apparatuses, and imaging apparatus C is the second imaging apparatus, then when the first video is a video collected by imaging apparatus A, the second video may include a video collected by imaging apparatus C, and includes a video collected by imaging apparatus B; when the first video is a video collected by the capturing device B, the second video may include a video collected by the capturing device C, and may also include a video collected by the capturing device A.

Based on the first video, the risky commodity corresponding to the human body trajectory (hereinafter referred to as the first human body trajectory) can be obtained, and the first human body trajectory can be understood as the human body trajectory of a customer may has certain risk. Based on the first video, a human body feature corresponding to the first human body trajectory can also be obtained (hereinafter may be recorded as the first human body feature). The number of first human trajectory obtained based on one single first video may be one or more. For example, the first human body feature can be obtained by first detecting the human body in the video frame to obtain the position of the human body in the video frame, and then performing feature extraction based on the position of the human body. The first human body trajectory can be obtained by performing cross-frame correlation based on the human body feature. The first human body feature may include, for example, a facial feature and a human body re-identification (re-identification, ReID) feature.

A risk commodity is a commodity with a risk of theft determined through algorithm analysis of the first video. Since the monitoring range of the first imaging apparatus is small, the risk commodity obtained based on the first video may include items that do not require payment. It should be noted that, regarding the implementation method of determining risk commodity based on the first video, reference may be made to the specific descriptions in related technologies, and details will not be described again here.

Based on the second video, an item should be excluded corresponding to the human body trajectory (hereinafter referred to as the second human body trajectory) can be obtained. Based on the second video, a human body feature corresponding to the second human body trajectory can also be obtained (hereinafter may be recorded as a second human body feature). For example, the number of second human body trajectory obtained based on one single second video may be one or more. It should be noted that the method of determining the second human body feature and the second human body trajectory is similar to the method of determining the first human body feature and the first human body trajectory, which will not be described again here. The second human body feature may include, for example, a facial feature and a human body ReID feature.

The item should be excluded refers to item should be excluded from the risk commodity and do not require payment. The item should be excluded is related to the second video. Specifically, the second video can be any video that can record the relevant process involving the item that does not require payment.

Considering that customer may bring items with them when entering the store, in order to reduce the occurrence of identifying items brought by customer as a risk commodity, in one embodiment, the second video can be used to record the process of customer entering the store. Correspondingly, the item should be excluded based on the second video may include items brought by the customer. For example, human body detection can be performed on video frames to obtain the position of the human body in the image, and handheld items can be detected based on the position of the human body (the handheld items here can be understood as items brought by the customer). It should be noted that, regarding the implementation of detecting the human body and detecting hand-held items, reference can be made to the specific descriptions in related technologies, which will not be described again here.

And/or, considering that customer may give up purchasing some commodity during the scan code payment process, in order to reduce the occurrence of misidentification of a commodity returned by customer as a risk commodity, in one embodiment, the second video can be used to record a process of putting back a commodity after a customer starting a self-service checkout code scanning. Correspondingly, the item should be excluded obtained based on the second video may include the returned commodity, For example, the commodity can be put back on the shelf, or other locations in the store. For example, human body detection can be performed on video frames to obtain the position of the human body in the image, a hand-held item can be detected based on the position of the human body, and the action of putting the item back can be identified (hand-held item with the action of putting back can be understood as item being put back). For example, the action of putting back the item means that for a human body trajectory, the hand holds the item in the first few frames, but there is no item in the next few frames.

And/or, considering that customer may have paid for a commodity in the store before scanning the QR code to pay, in order to reduce the occurrence of misidentification of a commodity that customer have paid for as a risk commodity, in one embodiment, the second video can be used to record the process of a checkout at a device other than a self-service checkout device of a customer, Correspondingly, the item should be excluded obtained based on the second video may include paid items. For example, other devices may include other self-service checkout device, or checkout device for counters, etc. For example, the paid commodity can be mapped to the video frame based on the commodity's code scanning time to determine the paid commodity on other devices.

In the embodiment of the present application, it is possible to determine the risk commodity corresponding to the first human body trajectory obtained based on the first video, and the item should be excluded corresponding to the associated human body trajectory associated with the first human body trajectory obtained based on the second video.

In one embodiment, the associated human body trajectory of the first human body trajectory can be determined by the electronic device 12. Based on this, the method provided in this embodiment can also include: obtaining a human body feature corresponding to the first human body trajectory obtained based on the first video and a human body feature corresponding to the second human body trajectory obtained based on the second video; and, determining the second human body trajectory in which a human body object corresponding to the second human body trajectory being same with a human body object corresponding to the first human body trajectory as the associated human body trajectory of the first human body trajectory, based on the first human body feature and the second human body feature.

The same human body object may appear under different imaging apparatuses. In order to know the human body trajectories of the same human body object under different imaging apparatuses, human body trajectory association across different imaging apparatuses can be implemented. Specifically, the human body trajectory of the same human body object under different imaging apparatuses can be determined based on the human body feature corresponding to the human body trajectory. The second human body trajectory can be used as the associated human body trajectory of the first human body trajectory, when the human body object corresponding to the second human body trajectory being the same human body object corresponding to the first human body trajectory.

For example, the human body trajectories of the same human object collected by different imaging apparatuses can be determined through clustering. The trajectories in the same cluster obtained by clustering are the trajectories of the same human object collected by different imaging apparatuses. For example, considering that a tracking identifier (TrackID) can uniquely identify one trajectory, clustering of human body trajectories can be achieved by clustering a human body tracking identifier.

Based on this, in one embodiment, the first human body trajectory has a corresponding human body tracking identifier (hereinafter may be recorded as the first human body tracking identifier), and the second human body trajectory has a corresponding human body tracking identifier (hereinafter may be recorded as the second human body tracking identifier); based on the first human body feature and the second human body feature, the determining the second human body trajectory in which a human body object being same with a human body object corresponding to the first human body trajectory as the associated human body trajectory of the first human body trajectory, based on the first human body feature and the second human body feature includes: the first human body tracking identifier and the second human body tracking identifier are clustered to obtain a cluster, the second human trajectory corresponding to the second human tracking identifier in a same cluster as the first human tracking identifier is a human trajectory in which a human body object being same with the human body object corresponding to the first human trajectory. It should be noted that, regarding the implementation method of clustering human body tracking identifier based on human body feature, please refer to the specific descriptions in related technologies, and will not be described again here.

In shopping scenarios, there is usually a companion, which refers to person who shops together in the store. They may check out together, or check out by one of them on their behalf. Optionally, the situation of a companion can be taken into account when excluding an item that do not require payment from the risk commodity, thereby further improving the accuracy of identification. Based on this, the method provided by this embodiment may also include: determining a companion of the human body object corresponding to the first human body trajectory; and determining the second human body trajectory in which a human body object corresponding to the second human body trajectory being the companion of the human body object corresponding to the first human body trajectory as the associated human body trajectory of the first human body trajectory. It should be noted that, regarding the implementation method of determining a companion, reference can be made to the specific implementation in related technologies, which will not be described again here.

In the embodiment of the present application, after determining the a risk commodity corresponding to the first human body trajectory obtained based on the first video, and the item should be excluded corresponding to the associated human body trajectory associated with the first human body trajectory obtained based on the second video, it is possible to process the risk commodity corresponding to the first human body trajectory based on the associated human body trajectory, to exclude a risk commodity being the item should be excluded corresponding to the associated human body trajectory from the risk commodity corresponding to the first human body trajectory, to obtain a processed risk commodity.

Optionally, manual comparison can be used to determine whether the risk commodity that needs to be excluded from the risk commodity is the risk commodity that should be excluded. Based on this, in one embodiment, step 22 may specifically include: displaying an image of the risk commodity corresponding to the first human body trajectory and an image of the item should be excluded corresponding to the associated human body trajectory, to enable a staff to determine a target risk commodity in the risk commodity corresponding to the first human body trajectory belonging to a same item with the item should be excluded corresponding to the associated human body trajectory; and excluding the target risk commodity from the risk commodity corresponding to the first human body trajectory. For example, the image of the risk commodity and the image of item should be excluded can be obtained through image detection of video frames. For example, the image of the customer's risk commodity and the image of the item brought by customer and his/her companion can be displayed, so that a staff can determine whether the displayed risk commodity is the item brought by customer by comparing the appearance of the risk commodity with the appearance of the item brought by customer and his/her companion.

Or optionally, it can be determined through automatic comparison that the risk commodity that needs to be excluded from the risk commodity is the risk commodity that should be excluded. The feature similarity can be determined, and whether the risky commodity is the item should be excluded are the same based on the feature similarity. It should be noted that the risk commodity being same with the item should be excluded should be excluded. For example, the feature of the risk commodity can be extracted based on the position of risk commodity in the video frame, and the feature of the item should be excluded can be extracted based on the position of the item should be excluded in the video frame.

Based on this, the method provided by this embodiment may also include: acquiring a feature of the risk commodity obtained based on the first video, and a feature of the item should be excluded obtained based on the second video; the 22 may specifically include: determining a target risk commodity in the risk commodity corresponding to the first human body trajectory belonging to a same item with the item should be excluded corresponding to the associated human body trajectory based on the feature of the risk commodity and the feature of the item should be excluded; and excluding the target risk commodity from the risk commodity corresponding to the first human body traj ectory.

It should be noted that the determined target risk commodity may be empty. When the determined target risk commodity is empty, it can mean that the risk commodity corresponding to the first human body trajectory does not include the target risk commodity being the same item as the excluded item corresponding to the associated human body trajectory. In this case, after performing the step of excluding the target risk commodity from the risk commodity corresponding to the first human body trajectory, the risk commodity corresponding to the first human body trajectory can remain unchanged.

Optionally, after determining the processed risk commodity, corresponding alarm information can also be output. Based on this, in one embodiment, the method provided by the embodiment of the present application can also include: alarm information about the processed risk commodity. The alarm information may include, for example, the human body tracking identifier of the first human body trajectory, the identifier of the self-service checkout device, information on processed risk commodity, etc. Further optionally, the alarm information may include a video frame of the second video corresponding to the processed risky commodity. For example, when displaying the risk commodity, the image of the customer entering the entrance of the supermarket located by algorithm can be displayed at the same time. In this way, the staff can easily judge whether the displayed risk commodity is an item brought the customer by observing whether the customer held an item and comparing the appearance of the commodity.

The risk identification method for self-service checkout provided by the present embodiment determines the risk commodity corresponding to the first human body trajectory obtained based on the first video, and the item should be excluded corresponding to associated human body trajectory associated with the first human body trajectory obtained based on the second video, and performs the risk commodity corresponding to the first human body trajectory based on the associated human body trajectory, so as to exclude the risk commodity being the item should be excluded corresponding to the associated human body trajectory from the risk commodity corresponding to the first human body trajectory, to acquire the processed risk commodity, which enables the excluding the items that are determined as not requiring payment from the risk commodity determined based on the video collected by the imaging apparatus on a single self-service checkout device, thereby reducing the misidentification of risk commodity, reducing the misrecognition rate of the risk commodity, and improving the recognition accuracy.

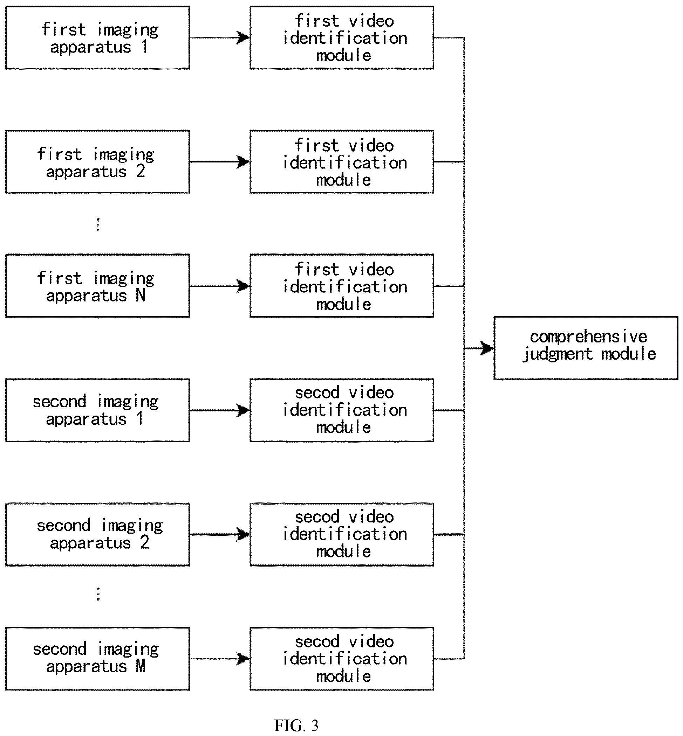

FIG. 3 is a schematic structural diagram of a self-service checkout loss prevention system according to an embodiment of the present application. As shown in FIG. 3, the self-service checkout system can mainly include 5 modules, namely a first imaging apparatus, a second imaging apparatus, a first video recognition module, a second video recognition module and a comprehensive judgment module. In the comprehensive judgment module, the human body feature can be used for human body association, and the identified risk commodity can be filtered based on the association result.

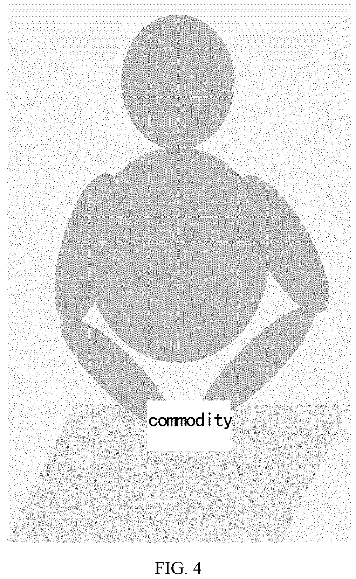

The first imaging apparatus: installed or integrated on the self-service checkout device, for collecting the process of a customer bringing commodity to the self-service checkout device to scan for payment, for use in video recognition algorithm analysis. The video frame collected by the first camera may be as shown in FIG. 4, for example. It should be noted that the first imaging apparatuses 1 to N in FIG. 1 may refer to imaging apparatus cameras installed or integrated on N self-service checkout devices and each self-service checkout device may be installed or integrated with one imaging apparatus.

The second imaging apparatus is a monitoring apparatus used and installed in actual scenes with a large number, which is located in entrances, exits, aisles, shelves and other areas, etc.

The first video recognition module identifies risks in the process of the self-service checkout scanning code payment, outputs risk commodity, and extracts human body feature.

The second video recognition module extracts human body feature, identifies the item held by the customer and the action of a customer putting the item back.

The comprehensive judgment module associates the behaviors in the self-service checkout device and the second imaging apparatus (such as payment behavior, hand-holding behavior, and return behavior) of a customer with associated item to determine a risk situation with regard to a customer who is identified as risky by the algorithm in a single self-service checkout device (customer with risk commodity can be recorded as risk customer), by using the human body feature obtained from the two types of video recognition algorithms.

It should be noted that the comprehensive judgment module in FIG. 3 can be deployed in the electronic device 12 to realize risk identification of self-service checkout. Optionally, the first video recognition module and/or the second video recognition module in FIG. 3 can be deployed in the electronic device 12 to realize video recognition with regard to the videos collected by the first imaging apparatus and/or the second imaging apparatus in FIG. 3. The first imaging apparatus in FIG. 3 refers to the imaging apparatus used to collect the process of customer using the self-service checkout device to check out, and the second imaging apparatus refers to the imaging apparatus used to collect other processes.

The first video recognition module, the second video recognition module and the comprehensive judgment module will be described in detail below.

### 1. The first video recognition module

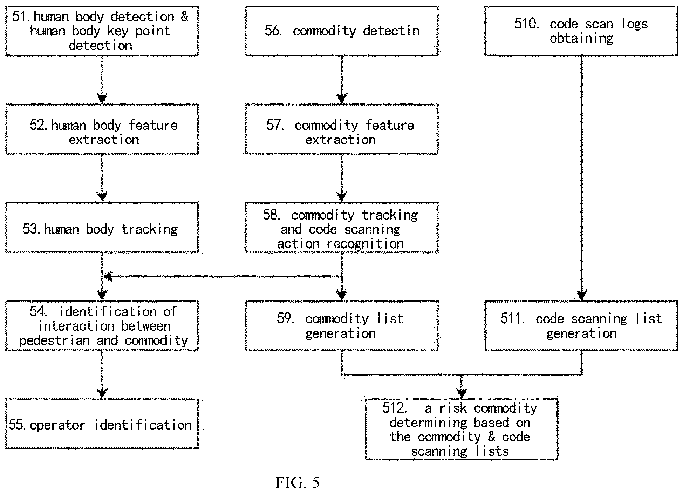

The processing flow of video recognition by the first video recognition module can be shown in FIG. 5. For example, the process shown in FIG. 5 can be executed in response to an operation input by the user, such as the user's click operation on the start checkout button. Or, for example, when a human body is detected and the proportion of the human body exceeds the threshold, the transaction can be considered to start and the process shown in FIG. 5 can be executed.

Referring to FIG. 5, the processing flow of the first video recognition module processing the video recognition can be mainly divided into 4 parts:
(1) The left part, which can be used to determine the operator and output the human body feature of the operator. The human body feature includes but is not limited to a facial feature and a human body ReID feature.

As shown in FIG. 5, in step 51, human body detection and human body key point detection can be performed on the video (i.e., the first video). Through human body detection, the position of the human body in the video frame can be obtained (which can be represented by a rectangular frame). Through key point detection, the location of human body key point can be obtained (mainly including hand key point) in the video frame. After that, in step 52, human body feature can be extracted based on the position of the human body to obtain human body feature. Afterwards, in step 53, human body tracking can be performed based on human body feature to obtain the human body trajectory. Since the key point belongs to the human body, the key point trajectory can also be obtained. After obtaining the key point trajectory and obtaining the commodity trajectory in the middle part, in step 54, the interaction relationship between pedestrian and commodity can be identified to identify pedestrian who has a taking relationship with the commodity from at least one pedestrian. For example, distances between the locations of commodities in multiple video frames and the position of the key point of the hand are calculated, and a pedestrian having take-up relation can be selected from the video frame according to the distances. Then, in step 55, operator identification can be performed. For example, the pedestrian who has taken commodity more than a threshold in the entire scan code payment process can be determined as the operator of the current transaction. There can be one or more operators.

(2) The middle part, which can be used to generate a commodity list and provides the commodity track to the left part.

As shown in FIG. 5, for the same video processed in the left part, commodity detection can be performed on it in step 56. Through commodity detection, the position of the commodity in the video frame can be obtained. Afterwards, in step 57, commodity feature can be extracted based on the location of the commodity to obtain commodity feature. After that, in step 58, commodity tracking can be performed based on the commodity feature to obtain the commodity trajectory, and scanning action recognition can be performed based on the commodity trajectory to identify whether a code scanning action has been formed for the commodity. For example, if the trajectory of a certain commodity enters a marked code scanning area and stays longer than the threshold, it can be considered that a code scanning action has been formed for the commodity. After that, a commodity list can be generated in step 59. All detected commodities, including commodity with code scanning actions and commodity without code scanning actions, can be recorded in a commodity list. For commodity with code scanning actions, the moment when the code scanning action occurs can also be recorded. For example, the commodity list can record the tracking ID of the commodity, the feature of the commodity, whether the QR code scanning action occurred and the time of occurrence.

(3) The right part, which can be used to generate a code scanning list.

As shown in FIG. 5, in step 510, the code scanning log of self-service code scanning using the self-service checkout device can be obtained, and then in step 511, a code scanning list can be generated based on the code scanning log. For example, the code scanning list may include the virtual identification (such as a barcode) of the commodity and the scanning time of the commodity. For multiple identical commodities, they may be divided into multiple entries in the code scanning list, or number of the commodity can be added in the code scanning list.

(4) The last part, which can be used to identify commodity having a risk (i.e. risk commodity).

As shown in FIG. 5, in step 512, a risk commodity can be determined based on the commodity list and the code scanning list. For example, for a commodity that appears in the commodity list and the code scanning action at the same time, if the time difference between the time when the code scanning action occurs and the time when the code scanning action occurs for a commodity in the code scanning list is less than a threshold, it can be considered to be a commodity has been successfully scanned, otherwise it can be considered as a commodity with fake scan or failed scan. For a commodity that appears in the commodity list with no code scanning action occurring, if the commodity track has disappeared when all operators leave, namely, being taken away by the customer, it can be considered as a commodity that is at risk of being missed. For example, the threshold used for comparing the time difference may be a fixed threshold, or may be a variable threshold. For example, the threshold may be related to the customer's own code scanning frequency. For example, when a customer scans a commodity in the 1st, 2nd, and 3rd seconds respectively, the threshold may be 0.5 seconds. For another example, when a customer scans a commodity at the 10th, 20th, and 30th second, the threshold may be, for example, 5 seconds.

It should be understood that the operator of risk commodity in FIG. 5 can be understood as risk customer.

It should be noted that the process shown in FIG. 5 is only an example.

### 2. The second video recognition module

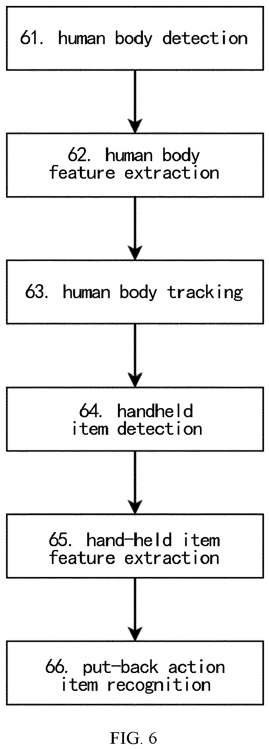

The processing flow of video recognition performed by the second video recognition module can be shown in FIG. 6. Referring to FIG. 6, for the video collected by the second imaging apparatus, in step 61, human body detection can be performed to obtain the position of the human body in the video frame. Afterwards, in step 62, human body feature can be extracted based on the position of the human body to obtain human body feature. After that, in step 63, the human body can be tracked based on the human body feature to obtain the human body trajectory, and in step 64, the handheld item can be detected to obtain the position of the handheld item in the video frame. The handheld item can include item brought by the customer and/or or item being returned. After that, in step 65, hand-held item feature extraction can be performed based on the position of the hand-held item to obtain the feature of the item, and in step 66, the put-back action item recognition is performed to determine the item to be put back. For example, the detection of handheld item can be implemented by using the human body detection model, that is, a multi-task detection model is implemented to detect the human body and handheld item at the same time. The input of the multi-task detection model can be a single frame image, and the output can include the position + confidence of the human body in the image, and the position + confidence of handheld item in the image. Alternatively, the detection of handheld item can be implemented using an independent target detection model. The input of the target detection model can be a single frame image, and the output can include the position + confidence of the handheld object in the image.

It should be noted that the process shown in FIG. 6 is only an example.

### 3. The comprehensive judgment module

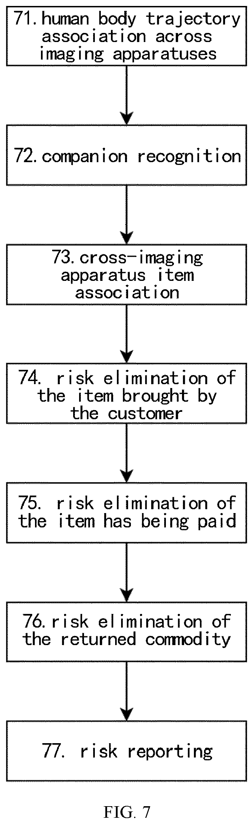

The processing flow of the comprehensive judgment module to judge risk commodity can be shown in FIG. 7. Referring to FIG. 7, in step 71, human body trajectory association across imaging apparatuses can be performed. For example, the human body feature of the human body trajectory output by the first video recognition module and second video recognition module, such as facial feature and human body ReID feature, can be used to cluster all human body trajectories. The trajectories in the same cluster are the trajectories of one customer collected by different monitoring cameras. Afterwards, companion recognition can be performed in step 72. For example, for each customer who is identified as being at risk in the first video identification module, his/her companion can be identified within all the clustering ranges obtained in step 72. The method of identifying the companion can be, for example: if the number of the second imaging apparatuses with a pedestrian and certain risk customer appearing at the same time is greater than the threshold, or the time of a pedestrian and certain risk customer appearing in corresponding second imaging apparatus at the same time during the self-service code scanning payment process is longer than one threshold, and the distance between the two is less than the other threshold, then this pedestrian can be considered as a companion of this risk customer. It should be noted that multiple operators identified for the same transaction can be considered as companions. One possible scenario is that the multiple operators each take the commodity and finally check out together.

Afterwards, cross-imaging apparatus item association may be performed in step 73. For example, for each customer identified as a risk in the first video identification module, three types of items can be associated. For example, one type can be the hand-held item of risk customer and his/her companion when they appear at the supermarket entrance imaging apparatus, and the other type can be the hand-held commodity before put back by the risk customer and his/her companion (which can be limited to the action of putting the items back occurring after the self-service code scanning starts), and the third is the commodities that appeared when the risk customer and his/her companion scanned the code to pay in each first imaging apparatus. For example, when items are associated, the commodity and item features extracted by the first video recognition module and the second video recognition module can be used. If the feature similarity is greater than the threshold, it can be considered to be the same item.

After that, in step 74, risk elimination of the item brought by the customer can be performed. For example, for a commodity identified as risky in the first video recognition module, if in step 74, the hand-held item of the corresponding risk customer or his/her companion appearing in the first imaging apparatus at the supermarket entrance are associated with the same item, then it can be considered that this item is actually the own item brought into the supermarket by the risk customer or his/her companion, and there is no risk.

Afterwards, in step 75, risk elimination of the item has being paid can be performed. For example, for a commodity identified as risky in the first video recognition module, if in step 73, is associated with a commodity that has been scanned and paid by the corresponding risk customer or his/her companion in other first imaging apparatuses in the supermarket being the same commodity, it can be considered that there is no risk for this commodity.

After that, in step 76, risk elimination of the returned commodity can be performed. For example, for a commodity identified as risky in the first video recognition module, if in step 73, is associated with the commodity put back by the corresponding risk customer or his/her companion being the same commodity, then this commodity can be considered as not taken away from the supermarket and there is no risk.

Afterwards, risk reporting can be performed in step 77. For example, for the commodity identified as risky in the first video recognition module, and is not eliminated after going through steps 74 to 76 can be output as risk of self-service checkout.

It should be noted that the process shown in FIG. 7 is only an example. Step 72, step 74, step 75 and step 76 in FIG. 7 may not all be included, and may only include part of them.

It should be noted that the comprehensive judgment module in FIG. 3 can be completely implemented using algorithms as introduced in FIG. 7, or can be implemented by through manual judgment by displaying images collected by different first imaging apparatuses and second imaging apparatuses. For example, when displaying risk commodity, the image of the corresponding risk customer entering entrance of the supermarket located by the algorithm can be displayed at the same time. In this way, the staff can easily judge whether the displayed risk commodity is an item brought the customer by observing whether the customer held an item and comparing the appearance of the commodity.

It should be noted that the specific implementation of the self-service checkout loss prevention system shown in FIG. 3 can take many forms. For example, visual recognition algorithms can be implemented inside the camera or in the computing device corresponding to each camera and comprehensive judgment can be implemented on the edge or cloud server. For another example, visual recognition and comprehensive judgment are both implemented within the same server.

It should be noted that M in FIG. 3 can be 0. When M is 0, N is at least 2. When M>0, N is at least 1.

The self-service checkout loss prevention system provided by this embodiment can, by associating the customer and item from the images of multiple first imaging apparatuses and second imaging apparatuses, after self-checkout risk identification, removing the risk misreporting due to the brought item, put back commodity and commodities have been paid at joint operation counters and commodities paid in separate orders, a more accurate risk alarm result can be obtained. When used to the in-process alarm, it can reduce the interruption to customer and reduce the burden on on-site staff. When used for post-process alarm, it can significantly reduce the audit workload, or provide staff with videos and pictures of related items, which can help improve audit efficiency.

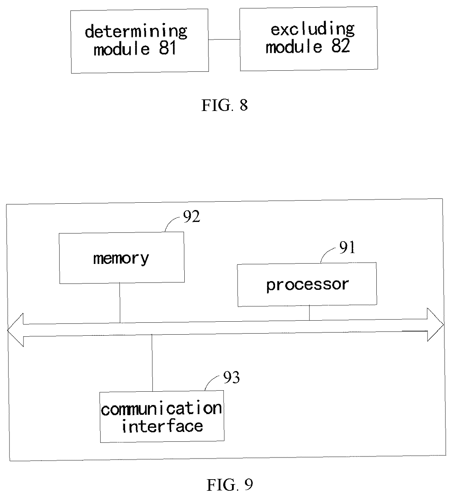

FIG. 8 is a schematic structural diagram of a risk identification apparatus for a self-service checkout provided by an embodiment of the present application; with reference to FIG. 8, this embodiment provides a risk identification apparatus that can perform the risk identification method for a self-service checkout provided by the above embodiment. Specifically, said apparatus may include:
a determining module 81, configured to determine a risk commodity corresponding to a first human body trajectory obtained based on a first video, and an item should be excluded corresponding to an associated human body trajectory associated with the first human body trajectory obtained based on a second video, wherein the first video and the second video are collected by imaging apparatuses with different monitoring ranges; and
an excluding module 82, configured to process the risk commodity corresponding to the first human body trajectory based on the associated human body trajectory, to exclude a risk commodity being the item should be excluded corresponding to the associated human body trajectory from the risk commodity corresponding to the first human body trajectory, to obtain a processed risk commodity.

In one possible implementation, the excluding module 82 is specifically configured to: display an image of the risk commodity corresponding to the first human body trajectory and an image of the item should be excluded corresponding to the associated human body trajectory, to enable a staff to determine a target risk commodity in the risk commodity corresponding to the first human body trajectory belonging to a same item with the item should be excluded corresponding to the associated human body trajectory; and exclude the target risk commodity from the risk commodity corresponding to the first human body trajectory.

In one possible implementation, the apparatus provided in this embodiment further includes a first acquiring module, configured to acquire a human body feature corresponding to the first human body trajectory obtained based on the first video and a human body feature corresponding to a second human body trajectory obtained based on the second video; and the excluding module 82 is specifically configured to: determine a target risk commodity in the risk commodity corresponding to the first human body trajectory belonging to a same item with the item should be excluded corresponding to the associated human body trajectory based on the feature of the risk commodity and the feature of the item should be excluded; and exclude the target risk commodity from the risk commodity corresponding to the first human body trajectory. In one possible implementation, the second video is used to record a process of a customer entering a store; the item should be excluded obtained based on the second video comprises a self-brought item.

In one possible implementation, the second video is used to record a process of putting back a commodity after a customer starting a self-service checkout code scanning; the item should be excluded obtained based on the second video comprises a commodity being put back.

In one possible implementation, the second video is used to record a process of a checkout at a device other than a self-service checkout device of a customer; the item should be excluded obtained based on the second video comprises commodity has been paid for.

In one possible implementation, the apparatus provided by the embodiment further includes a second acquiring module and an associating module; the second acquiring module is configured to acquire a human body feature corresponding to the first human body trajectory obtained based on the first video and a human body feature corresponding to a second human body trajectory obtained based on the second video; the associating module is configured to determine the second human body trajectory in which a human body object corresponding to the second human body trajectory being same with a human body object corresponding to the first human body trajectory as the associated human body trajectory of the first human body trajectory, based on the first human body feature and the second human body feature.

In one possible implementation, the associating module further configured to determine a companion of the human body object corresponding to the first human body trajectory; and determine the second human body trajectory in which a human body object corresponding to the second human body trajectory being the companion of the human body object corresponding to the first human body trajectory as the associated human body trajectory of the first human body trajectory.

In one possible implementation, the first human body trajectory has a corresponding first human body tracking identifier, and the second human body trajectory has a corresponding second human body tracking identifier; the associating module determining the second human body trajectory in which a human body object being same with a human body object corresponding to the first human body trajectory as the associated human body trajectory of the first human body trajectory, based on the first human body feature and the second human body feature comprises: clustering the first human body tracking identifier and the second human body tracking identifier to obtain a cluster, wherein the second human trajectory corresponding to the second human tracking identifier in a same cluster as the first human tracking identifier is a human trajectory in which a human body object being same with the human body object corresponding to the first human trajectory.

In one possible implementation, a number of the imaging apparatus used to collect the second video is one or more, when there are at least two imaging apparatuses used to collect the second video, the monitoring ranges of the at least two imaging apparatuses are different.

In one possible implementation, the apparatus provided by the embodiment further comprises an alarming module, configured to output alarm information about the processed risk commodity.

In one possible implementation, the alarm information comprising: a video frame of the second video corresponding to the processed risky commodity.

The apparatus shown in FIG. 8 can execute the method provided by the embodiment shown in FIG. 2. For parts that are not described in detail in this embodiment, reference can be made to the relevant description of the embodiment shown in FIG. 2. For the implementation process and technical effects of this technical solution, please refer to the description in the embodiment shown in FIG. 2 and will not be described again here. In one possible implementation, the structure of the apparatus shown in FIG. 8 can be implemented as an electronic device. As shown in FIG. 9, the electronic device may include: a processor 91 and a memory 92. The memory 92 stores a program that supports the controller to execute the method provided by the embodiment shown in FIG. 2, and the processor 91 is configured to execute the program stored in the memory 92.

The program includes one or more computer instructions. When one or more computer instructions are executed by the processor 91, the following steps can be achieved:
determining a risk commodity corresponding to a first human body trajectory obtained based on a first video, and an item should be excluded corresponding to an associated human body trajectory associated with the first human body trajectory obtained based on a second video, wherein the first video and the second video are collected by imaging apparatuses with different monitoring ranges; and
processing the risk commodity corresponding to the first human body trajectory based on the associated human body trajectory, to exclude a risk commodity being the item should be excluded corresponding to the associated human body trajectory from the risk commodity corresponding to the first human body trajectory, to obtain a processed risk commodity.

Optionally, the processor 91 is also used to execute all or part of the steps in the aforementioned embodiment shown in FIG. 2.

The structure of the electronic device may also include a communication interface 93 for the electronic device to communicate with other devices or communication networks.

An embodiment of the present application also provides a computer-readable storage medium on which a computer program is stored. When the computer program is executed, the method described in the embodiment shown in FIG. 2 is implemented. The apparatus embodiments described above are only illustrative. The units described as separate components may or may not be physically separated. The components shown as units may or may not be physical units, that is, they may be located in one location, or it can be distributed across multiple network units. Some or all of the modules can be selected according to actual needs to achieve the purpose of the solution of this embodiment. Persons of ordinary skill in the art can understand and implement it without exerting creative efforts.

From the above description of the embodiments, those skilled in the art can clearly understand that each embodiment can be implemented by adding the necessary general hardware platform, or of course, can also be implemented by combining hardware and software. Based on this understanding, the above-mentioned technical solution can be embodied in the form of a computer product in nature or in other words, the part that contributes to the existing technology. The present application can use one or more computer-usable storage devices containing computer-usable program codes. The form of a computer program product implemented on media (including but not limited to disk storage, CD-ROM, optical storage, etc.).

The present application is described with reference to flowchart illustrations and/or block diagrams of methods, apparatus (systems), and computer program products according to embodiments of the application. It will be understood that each process and/or block in the flowchart illustrations and/or block diagrams, and combinations of processes and/or blocks in the flowchart illustrations and/or block diagrams, can be implemented by computer program instructions. These computer program instructions may be provided to a processor of a general purpose computer, special purpose computer, embedded processor, or other programmable device to produce a machine, such that the instructions executed by the processor of the computer or other programmable device to produce an apparatus for implementing the functions specified in process or processes in diagram and/or block or processes in block diagram.

These computer program instructions may also be stored in a computer-readable memory that causes a computer or other programmable device to operate in a particular manner, such that the instructions stored in the computer-readable memory produce an article of manufacture that includes instruction means that performs A function specified in a process or processes in a flowchart and/or in a block or blocks in a block diagram.

These computer program instructions may also be loaded onto a computer or other programmable device such that a series of operational steps are performed on the computer or other programmable device to produce a computer-implemented process, whereby the instructions executed on the computer or other programmable device provide The steps used to implement the functionality specified in a process or processes in a flow diagram and/or in a block or blocks in a block diagram.

In a typical configuration, a computing device includes one or more processors (CPUs), input/output interfaces, network interfaces, and memory.

Memory may include non-permanent storage in computer-readable media, random access memory (RAM), and/or non-volatile memory in the form of read-only memory (ROM) or flash memory (flash RAM). Memory is an example of computer-readable media.

Computer-readable media includes persistent and non-volatile, removable and non-removable media that can be implemented by any method or technology for storage of information. The information may be computer-readable instructions, linked lists, modules of a program, or other data.

Examples of computer storage media include, but are not limited to, phase change memory (PRAM), static random access memory (SRAM), dynamic random access memory (DRAM), other types of random access memory (RAM), and read-only memory. (ROM), electrically erasable programmable read-only memory (EEPROM), flash memory or other memory technology, compact disc read-only memory (CD-ROM), digital versatile disc (DVD) or other optical storage, Magnetic tape cassette, tape magnetic disk storage or other magnetic storage device or any other non-transmission medium that stores information that can be accessed by a computing device. As defined in this article, computer-readable media does not include transitory media, such as modulated data signals and carrier waves.

Finally, it should be noted that the above embodiments are only used to illustrate the technical solution of the present application, but not to limit it; although the present application has been described in detail with reference to the foregoing embodiments, those of ordinary skill in the art should understand that: The technical solutions described in the foregoing embodiments can still be modified, or some or all of the technical features can be equivalently replaced; and these modifications or substitutions do not deviate from the essence of the corresponding technical solutions from the scope of the technical solutions of the embodiments of the present application

## Claims

1. A risk identification method for self-service checkout, comprising:
determining a risk commodity corresponding to a first human body trajectory obtained based on a first video, and an item should be excluded corresponding to an associated human body trajectory associated with the first human body trajectory obtained based on a second video, wherein the first video and the second video are collected by imaging apparatuses with different monitoring ranges; and
processing the risk commodity corresponding to the first human body trajectory based on the associated human body trajectory, to exclude a risk commodity being the item should be excluded corresponding to the associated human body trajectory from the risk commodity corresponding to the first human body trajectory, to obtain a processed risk commodity.

2. The method according to claim 1, wherein the processing the risk commodity corresponding to the first human body trajectory based on the associated human body trajectory, comprises:
displaying an image of the risk commodity corresponding to the first human body trajectory and an image of the item should be excluded corresponding to the associated human body trajectory, to enable a staff to determine a target risk commodity in the risk commodity corresponding to the first human body trajectory belonging to a same item with the item should be excluded corresponding to the associated human body trajectory; and
excluding the target risk commodity from the risk commodity corresponding to the first human body trajectory.

3. The method according to claim 1, further comprising:
acquiring a feature of the risk commodity obtained based on the first video, and a feature of the item should be excluded obtained based on the second video;
wherein the processing the risk commodity corresponding to the first human body trajectory based on the associated human body trajectory, comprises:
determining a target risk commodity in the risk commodity corresponding to the first human body trajectory belonging to a same item with the item should be excluded corresponding to the associated human body trajectory based on the feature of the risk commodity and the feature of the item should be excluded; and
excluding the target risk commodity from the risk commodity corresponding to the first human body trajectory.

4. The method according to claim 1, wherein the second video is used to record a process of a customer entering a store; the item should be excluded obtained based on the second video comprises a self-brought item.

5. The method according to claim 1, wherein the second video is used to record a process of putting back a commodity after a customer starting a self-service checkout code scanning; the item should be excluded obtained based on the second video comprises a commodity being put back.

6. The method according to claim 1, wherein the second video is used to record a process of a checkout at a device other than a self-service checkout device of a customer; the item should be excluded obtained based on the second video comprises commodity has been paid for.

7. The method according to any one of claims 1 to 6, further comprising:
acquiring a human body feature corresponding to the first human body trajectory obtained based on the first video and a human body feature corresponding to a second human body trajectory obtained based on the second video; and
determining the second human body trajectory in which a human body object corresponding to the second human body trajectory being same with a human body object corresponding to the first human body trajectory as the associated human body trajectory of the first human body trajectory, based on the first human body feature and the second human body feature.

8. The method according to claim 7, further comprising:
determining a companion of the human body object corresponding to the first human body trajectory; and
determining the second human body trajectory in which a human body object corresponding to the second human body trajectory being the companion of the human body object corresponding to the first human body trajectory as the associated human body trajectory of the first human body trajectory.

9. The method according to claim 7, wherein the first human body trajectory has a corresponding first human body tracking identifier, and the second human body trajectory has a corresponding second human body tracking identifier; and wherein the determining the second human body trajectory in which a human body object being same with a human body object corresponding to the first human body trajectory as the associated human body trajectory of the first human body trajectory, based on the first human body feature and the second human body feature comprises:
clustering the first human body tracking identifier and the second human body tracking identifier to obtain a cluster, wherein the second human trajectory corresponding to the second human tracking identifier in a same cluster as the first human tracking identifier is a human trajectory in which a human body object being same with the human body object corresponding to the first human trajectory.

10. The method according to any one of claims 1 to 6, wherein a number of the imaging apparatus used to collect the second video is one or more, when there are at least two imaging apparatuses used to collect the second video, the monitoring ranges of the at least two imaging apparatuses are different.

11. The method according to any one of claims 1 to 6, further comprising: outputting alarm information about the processed risk commodity.

12. The method according to claim 11, wherein the alarm information comprising: a video frame of the second video corresponding to the processed risky commodity.

13. A risk identification apparatus for self-service checkout, comprising:
a determining module, configured to determine a risk commodity corresponding to a first human body trajectory obtained based on a first video, and an item should be excluded corresponding to an associated human body trajectory associated with the first human body trajectory obtained based on a second video, wherein the first video and the second video are collected by imaging apparatuses with different monitoring ranges; and
an excluding module, configured to process the risk commodity corresponding to the first human body trajectory based on the associated human body trajectory, to exclude a risk commodity being the item should be excluded corresponding to the associated human body trajectory from the risk commodity corresponding to the first human body trajectory, to obtain a processed risk commodity.

14. An electronic device, comprising: a memory and a processor; wherein the memory stores one or more computer instructions, when the one or more computer instructions are executed by the processor, the method according to any one of claims 1 to 12 is achieved.

15. A computer-readable storage medium, on which a computer program is stored, when the computer program is executed, the method according to any one of claims 1 to 12 is achieved.
